# EUROPÄISCHE PATENTANMELDUNG

(11) **EP 2 154 084 A1**
(43) Veröffentlichungstag der Anmeldung: **17.02.2010**
(21) Anmeldenummer: 08014485.0
(22) Anmeldetag: 14.08.2008
(51) Int. Cl.: B65D 81/34, B32B 1/02, B32B 27/08

(54) **Folie, geeignet zur Herstellung eines Schlauchbeutels, Schlauchbeutel, sowie Verfahren zur Herstellung der Folie**

(71) Anmelder: Hueck Folien Ges.m.b.H., 4342 Baumgartenberg (AT)
(72) Erfinder: Aigner, Johann, 4352 Klam (AT); Lindmeir, Thomas, 4224 Wartberg/Aist (AT)
(74) Vertreter: Landgraf, Elvira

(57) **Zusammenfassung**

Die Erfindung betrifft eine Folie geeignet zur Herstellung von Schlauchbeuteln mit einer wärmeschrumpfbaren Lage und einem mikrowellenempfindlichen Werkstoff, der der wärmeschrumpfbaren Lage zugeordnet ist, dadurch gekennzeichnet, dass die Folie von außen nach innen folgenden Aufbau aufweist:
a) eine siegelfähige Schicht, bestehend aus Polyethylen, Polypropylen, Polyamid oder deren Copolymeren oder Blends
b) eine ggf. transparente Sperrschicht gegen Sauerstoff bzw. Wasserdampf
c) eine Kaschierklebeschicht
d) eine partielle Druckschicht
e) eine schrumpffähige Folie
f) eine partielle metallische Suszeptorschicht
g) eine Kaschierklebeschicht
h) eine siegelfähige Schicht bestehend aus Polyethylen, Polypropylen, Polyamid oder deren Copolymeren oder Blends,
ein Verfahren zu deren Herstellung und einen daraus hergestellten Schlauchbeutel.

## Beschreibung

Die Erfindung betrifft eine Folie, die zur Herstellung eines insbesondere mikrowellenerhitzbaren Schlauchbeutels geeignet ist, sowie einen aus dieser Folie geformten Schlauchbeutel.

In einem Verfahren zur Herstellung eines Schlauchbeutels wird üblicherweise eine ebene Folienbahn über eine Formschulter geformt, durch eine Schweißnaht zu einem Schlauch gebildet, Füllgut in den Schlauchbeutel gefüllt und in Querrichtung der mit dem Füllgut befüllte Längenabschnitt oben und unten durch Verschweißen der Folie verschlossen. Dabei werden im wesentlichen Lebensmittel oder andere stückige oder granulare Materialien verpackt. Derartige Vorrichtungen bzw. Verfahren sind beispielsweise aus DE 33 45 459 A oder US 4 288 965 bekannt.

Aus WO 01/95753 A ist ein Verfahren zur Formung eines Rohlings zu einer gewünschten Form bekannt, bei dem der Aufbau des mehrschichtigen Rohlings eine wärmeschrumpfbare Schicht aufweist, durch die der Rohling bei Erwärmung, beispielsweise durch Mikrowelleneinwirkung auf eine definierte Weise verformt werden kann.

Aufgabe der vorliegenden Erfindung war es eine Folie, die zur Herstellung eines Schlauchbeutels geeignet ist, bereitzustellen, bei der ein aus dieser Folie hergestellter Schlauchbeutel auch nach der Erwärmung im Mikrowellenofen formstabil geöffnet werden kann und außerdem das darin verpackte wasser- und/oder fetthaltige Lebensmittel bei der Erwärmung im Mikrowellenofen knusprig gegart werden kann. Ferner muss der aus der Folie hergestellte Schlauchbeutel vor der Erwärmung in der Mikrowelle dicht sein und erst bei dem vom Verbraucher initiierten Öffnungsvorgang vor dem Garvorgang in einem Mikrowellenofen leicht zu öffnen sein.

Ferner soll die Folie bzw. der Schlauchbeutel mit einem Mehrfarbendruck versehen werden können.

Gegenstand der Erfindung ist daher eine Folie geeignet zur Herstellung von Schlauchbeuteln mit einer wärmeschrumpfbaren Lage, einem mikrowellenempfindlichen Werkstoff, der der wärmeschrumpfbaren Lage zugeordnet ist, dadurch gekennzeichnet, dass die Folie von außen nach innen folgenden Aufbau aufweist:
a) eine siegelfähige Schicht, bestehend aus Polyethylen, Polypropylen Polyamid oder deren Copolymeren oder Blends
b) eine ggf transparente Sperrschicht gegen Sauerstoff bzw. Wasserdampf
c) ein Kaschierkleber
d) eine partielle Druckschicht
e) eine schrumpffähige Folie
f) eine partielle metallische Suszeptorschicht
g) eine Kaschierklebeschicht
h) eine siegelfähige Schicht bestehend aus Polyethylen, Polypropylen Polyamid oder deren Copolymeren oder Blends.

Zur Herstellung der Folie wird vorerst eine schrumpffähige Folie bereitgestellt. Die schrumpffähige Folie kann beispielsweise eine Polyester- oder eine Polypropylenfolie sein.

Die schrumpffähige Folie soll dabei ein definiertes Schrumpfverhalten aufweisen, wobei gleichmäßiger Schrumpf in jeder Richtung im Allgemeinen vorteilhaft ist. Es ist aber auch möglich Folien mit in Maschinenrichtung höherem Schrumpf als in Querrichtung zu verwenden, wobei der Schrumpf in Maschinenrichtung etwa 2 bis 4 mal höher sein kann als in Querrichtung.
Üblicherweise weisen geeignete Folien bei 150°C einen Schrumpf von etwa 5 - 50 % auf.

Diese Folie wird in einem ersten Schritt auf einer Oberfläche mit einer partiellen Suszeptorbeschichtung versehen. Dazu wird eine partielle metallische Schicht auf einer Seite der schrumpfbaren Folie aufgebracht.

Diese Folie wird in einem ersten Schritt auf einer Oberfläche mit einer partiellen Suszeptorbeschichtung versehen. Dazu wird eine partielle metallische Schicht auf einer Seite der schrumpfbaren Folie aufgebracht.

Die partielle Aufbringung der Suszeptorberschichtung kann durch selektive Metallisierung, beispielsweise mittels einer Maske oder durch vollflächige Metallisierung mit anschließendem Ätzverfahren oder anschließender Demetallisierung oder durch Laserablation erfolgen.

Ein derartiges bevorzugtes Demetallisierungsverfahren ist beispielsweise aus EP 1 291 463 A bekannt.
Als metallische Beschichtungen kommen beispielsweise Ag, Cu, Al, Sn und dergleichen, in Frage.

Die Suszeptorbeschichtung ist so angeordnet, dass der fertige Folienverbund auf einer Vorrichtung zur Herstellung einer Schlauchbeutels wie eine Folie ohne Suszeptorbeschichtung verarbeitet werden kann. Gleichzeitig wird durch die Anordnung des Suszeptors auf der schrumpffähigen Folie die gewünschte Verformung des Schlauchbeutels bei Behandlung im Mikrowellenofen gewährleistet.

Vorteilhafterweise wird die Suszeptorbeschichtung in der Nähe der Seitennähte und am bei der Erwärmung im Mikrowellenofen zu bildenden Boden aufgebracht.
In einer besonderen Ausführungsform kann die Suszeptorbeschichtung das Design des an der gegenüberliegenden Oberfläche der Folie aufzubringenden Drucks unterstützen.

Auf der gegenüberliegenden Oberfläche der Folie wird registergenau zur Suszeptorbeschichtung eine Bedruckung in einem Ein- oder vorzugsweise Mehrfarbendruck aufgebracht.
Ein Verfahren zur registergenauen Beschichtung von Folienmaterial ist beispielsweise in EP 1 318 016 A beschrieben. Der Inhalt dieser Veröffentlichung wird hiermit in diese Offenbarung aufgenommen

Als Druckschichten kommen beispielsweise pigmentierte Lacke und Farben in Frage. Dabei können eine oder mehrere Druckschichten aufgebracht werden.
Die verwendeten Farben oder Lacke sind so gewählt, dass sie unter Mikrowelleneinfluss stabil bleiben, und nicht migrieren, das heißt sie müssen vor allem thermisch stabil sein.

Die mehrfarbige Bedruckung kann beispielsweise ein rein dekorativer Druck sein, oder Informationen für den Verbraucher, beispielsweise über das verpackte Produkt, Anwendungshinweise oder aber auch Produktdaten und dergleichen aufweisen.

Die derart beschichtete schrumpffähige Folie wird anschließend auf beiden Oberflächen mit einem üblichen Kaschierkleber zur Aufbringung weiterer Folien bzw. Schichten versehen.

Auf jene Oberfläche, die die Suszeptorschicht aufweist, wird eine siegelfähige Schicht, beispielsweise eine Folie bestehend aus Polyethylen, Polypropylen, oder Polyamid oder deren Copolymeren oder Blends kaschiert.
Vorteilhafterweise weisen diese Folien eine Siegeltemperatur von 110 bis 190°C, bevorzugt 140 bis 170 °C auf.

Die siegelfähige Folie kann pigmentiert sein um die Lichtdichtheit des aus des aus dem gesamten Folienaufbaus hergestellten Schlauchbeutels zu gewährleisten.

Auf jene Oberfläche, die die farbige Bedruckung aufweist wird ein siegelfähige Folie, die vorzugsweise eine transparente Sperrschicht aufweist, die gegen Gase, insbesondere Sauerstoff und Wasserdampf beständig ist, bzw. deren Transmission reduziert oder gänzlich unterbindet, aufgebracht.
Geeignete Sperrschichten sind beispielsweise transparente Siliciumoxidschichten, Aluminiumoxidschichten und dergleichen.

Als siegelfähige Folien eignen sich wiederum Folien aus Polyethylen oder Polypropylen, Polyamid oder deren Copolymeren oder Blends.

Zur einfacheren Öffnung der Schlauchfolie wird diese unterhalb einer nachfolgenden Querverschweißung mit einer Öffnungshilfe, beispielsweise einer durchgängigen Schwächung des Verbunds oder einer Perforation versehen. Die Perforation kann beispielsweise durch Laserperforation, Stanzen oder dergleichen eingebracht werden und punktförmig, kreuzförmig oder in jedem beliebigen Design ausgeführt sein..
Dabei erfolgt die Perforation von der Innenseite der Verpackung derart, dass die Barriereschicht nicht zerstört wird.

## Patentansprüche

1. Folie geeignet zur Herstellung von Schlauchbeuteln mit einer wärmeschrumpfbaren Lage, einem mikrowellenempfindlichen Werkstoff, der der wärmeschrumpfbaren Lage zugeordnet ist, **dadurch gekennzeichnet, dass** die Folie von außen nach innen folgenden Aufbau aufweist:
a) eine siegelfähige Schicht, bestehend aus Polyethylen, Polypropylen, Polyamid oder deren Copolymeren oder Blends
b) eine ggf. transparente Sperrschicht gegen Sauerstoff bzw. Wasserdampf
c) einen Kaschierkleber
d) eine partiellen Druckschicht
e) eine schrumpffähigen Folie
f) eine partielle metallische Suszeptorschicht
g) eine Kaschierklebeschicht
eine siegelfähige Schicht bestehend aus Polyethylen, Polypropylen, Polyamid oder deren Copolymeren oder Blends

2. Folie nach Anspruch 1, **dadurch gekennzeichnet ,dass** die siegelfähige Schicht eine Siegeltemperatur von 140 bis 170°C aufweist.

3. Folie nach einem der Ansprüche 1 bis 2, **dadurch gekennzeichnet, dass** die schrumpffähige Folie in Maschinen- und Querrichtung ein im Wesentlichen gleiches Schrumpfverhalten aufweist.

4. Folie nach einem der Ansprüche 1 bis 2, **dadurch gekennzeichnet, dass** die schrumpffähige Folie in Maschinenrichtung einen 2 bis 4-mal höheren Schrumpf aufweist als in Querrichtung.

5. Folie nach einem der Ansprüche 1 bis 4, **dadurch gekennzeichnet, dass** die partielle Drucksschicht eine Ein- oder Mehrfarbendruckschicht ist.

6. Folie nach einem der Ansprüche 1 bis 5, **dadurch gekennzeichnet, dass** die siegelfähige Folie der Schichten a) und h) pigmentiert ist um die Lichtdichheit sicherzustellen.

7. Folie nach einem der Ansprüche 1 bis 6, **dadurch gekennzeichnet, dass** die Sperrschicht eine transparente Sperrschicht aus Aluminiumoxid oder Siliciumoxid ist.

8. Folie nach einem der Ansprüche 1 bis 7, **dadurch gekennzeichnet, dass** die Suszeptorbeschichtung registergenau zur partiellen Druckschicht aufgebracht ist.

9. Folie nach einem der Ansprüche 1 bis 8, **dadurch gekennzeichnet dass** sie an einer definierten Stelle eine durchgängige Schwächung oder eine Perforation aufweist, wobei die Sperrschicht b) unbeschädigt ist.

10. Verfahren zur Herstellung einer zur Herstellung von mikrowellenerhitzbaren Schlauchbeuteln geeigneten Folie
**gekennzeichnet durch** folgende Verfahrensschritte
a) Bereitstellen einer schrumpffähigen Folie
b) Partielle Beschichtung einer Oberfläche der Folie mit einem metallischen Suszeptor
c) Partielle Beschichtung der gegenüberliegenden Oberfläche der Folie mit einer mehrfarbigen Druckschicht
d) Beschichtung beider Oberflächen der schrumpffähigen Folie mit einer Kaschierklebeschicht,
e) Aufbringen einer siegelfähigen Folie auf der dem Suszeptor zugewandten Oberfläche
f) Aufbringen einer siegelfähigen Folie, die eine Sauerstoff- und/oder Wasserdampfsperrschicht aufweist auf der dem mehrfarbigen Druck zugewandten Folienoberfläche
wobei der Verfahrensschritte e) und f) in umgekehrter Reihenfolge erfolgen können.

11. Verfahren nach Anspruch 10, **dadurch gekennzeichnet, dass** in den Folienaufbau eine durchgängige Schwächung oder Perforation eingebracht wird, wobei die Sperrschicht b) unbeschädigt bleibt.

12. Schlauchbeutel hergestellt aus einer Folie gemäß den Ansprüchen 1 bis 9.

13. Schlauchbeutel nach Anspruch 12, **dadurch gekennzeichnet, dass** er eine Öffnungshilfe in Form einer durchgängigen Schwächung oder einer Perforation aufweist, wobei die Sperrschicht b) unbeschädigt ist.
